# EUROPEAN PATENT APPLICATION

(11) **EP 1 659 368 A1**
(43) Date of publication of application: **24.05.2006**
(21) Application number: 04725515.3
(22) Date of filing: 02.04.2004
(51) Int. Cl.: G01C 21/34, G08G 1/137

(54) **PEDESTRIAN NAVIGATION SYSTEM**

(30) Priority: 29.08.2003 JP 2003306978
(71) Applicant: MITSUBISHI DENKI KABUSHIKI KAISHA, Chiyoda-ku Tokyo 100-8310 (JP)
(72) Inventor: KANDA, Junshiro, c/o Mitsubishi Denki K.K., Tokyo 100-8310 (JP)
(74) Representative: Pfenning, Meinig & Partner GbR
(86) International application number: PCT/JP2004/004840
(87) International publication number: WO 2005/024348

(57) **Abstract**

In a server 200, a location-to-image management means 201 stores image information indicating a one-to-one correspondence between images and plural pieces of location information about their shooting locations therein. When the server 200 receives a first request for route guidance from a terminal 100, a guidance control means 202 determines a predetermined guidance point which is located on a route, and then acquires image information corresponding to the guidance point from the location-to-image management means 201. The guidance control means then provides, as route guidance information, information about a guidance point which is located on the route forward of the predetermined guidance point, as well as the acquired image, for the terminal. When receiving a request for route guidance for the second and subsequent times, the guidance control means 202 provides guidance information corresponding to the request for the terminal 100.

## Description

### Field of the Invention

The present invention relates to a guidance system which provides terminals with guidance information using images.

### Background of the Invention

Conventionally, there have been provided guidance systems which provide pedestrians who are moving on foot with route guidance information using images, and which are so-called pedestrian navigation systems (for example, refer to patent reference 1).

In such a guidance system, terminals, such as mobile phones, and a server for providing guidance information for the terminals are connected, via communications, to each other via a network, for example. When a terminal makes a request for route guidance, the server provides the terminal with images and voice for route guidance.
[Patent reference 1] JP,2002-221433,A

In the related art guidance system, when receiving information about a place of departure and a destination from a terminal, the server searches for a route based on the information. The server then provides the terminal with images of points which are selected from guidance points prepared beforehand, such as intersections and landmarks, based on the searched route, and carries out guidance using scene images which are close to on-the-spot photo images.

However, in the related art guidance system, such images prepared beforehand are only the ones of fixed points, such as images of intersections. Therefore, when no images of arbitrary points other than intersections are prepared beforehand, for example, any terminal cannot check any image of such an arbitrary point. Thus, in the related art guidance system, since only images of fixed points, such as intersections, are prepared as images used for route guidance, the guidance system has a low degree of freedom and cannot adequately provide guidance information for users.

The present invention is made in order to solve the above-mentioned problem, and it is therefore an object of the present invention to provide a guidance system which can provide fine guidance information for users.

### Disclosure of the Invention

A guidance system in accordance with the present invention includes a server having a location-to-image management means for storing image information about images while associating them with plural pieces of location information, and a guidance control means, responsive to a request for route guidance from a terminal, for acquiring an image corresponding to a guidance point which is located on a route which is provided for the terminal for route guidance from the location-to-image management means, and for providing the images as route guidance information, for the terminal.

Since the guidance system is so constructed as to store image information about images while associating them with plural pieces of location information, and to, in response to a request for route guidance from the terminal located at an arbitrary location, provide, as guidance information, image information corresponding to the location for the terminal, the guidance system has an advantage of being able to provide fine guidance information for the terminal in response to various requests from the user.

### Brief Description of the Figures

Fig. 1 is a block diagram showing a guidance system in accordance with embodiment 1 of the present invention;
Fig. 2 is an explanatory diagram of a method of recording image data in accordance with embodiment 1 of the present invention;
Fig. 3 is an explanatory diagram showing an example of an interface of an information input means in accordance with embodiment 1 of the present invention;
Fig. 4 is a flow chart showing the operation of a guidance information generating means in accordance with embodiment 1 of the present invention;
Fig. 5 is an explanatory diagram of guidance information displayed by a display means in accordance with embodiment 1 of the present invention;
Fig. 6 is a block diagram showing a guidance system in accordance with embodiment 2 of the present invention;
Fig. 7 is a flow chart showing the operation of a guidance information generating means in accordance with embodiment 2 of the present invention;
Fig. 8 is a block diagram showing a guidance system in accordance with embodiment 3 of the present invention;
Fig. 9 is a flow chart showing the operation of a guidance information generating means in accordance with embodiment 3 of the present invention;
Fig. 10 is an explanatory diagram showing a relationship between a location at which a landmark can be seen and conditions in accordance with embodiment 3 of the present invention;
Fig. 11 is an explanatory diagram of points at each of which guidance information is provided for a terminal in accordance with embodiment 3 of the present invention;
Fig. 12 is an explanatory diagram of detection of a traveling direction relationship in accordance with embodiment 4 of the present invention;
Fig. 13 is an explanatory diagram showing an example of a composite screen display in accordance with embodiment 4 of the present invention;
Fig. 14 is a block diagram showing a guidance system in accordance with embodiment 5 of the present invention;
Fig. 15 is an explanatory diagram showing the data structure of a landmark database in accordance with embodiment 5 of the present invention;
Fig. 16 is a flow chart showing the operation of a guidance information generating means in accordance with embodiment 5 of the present invention; and
Fig. 17 is an explanatory diagram showing a screen display example in accordance with embodiment 5.

### Preferred Embodiments of the Invention

In order to explain the invention in greater detail, the preferred embodiments of the invention will be explained below with reference to the accompanying figures.

### Embodiment 1.

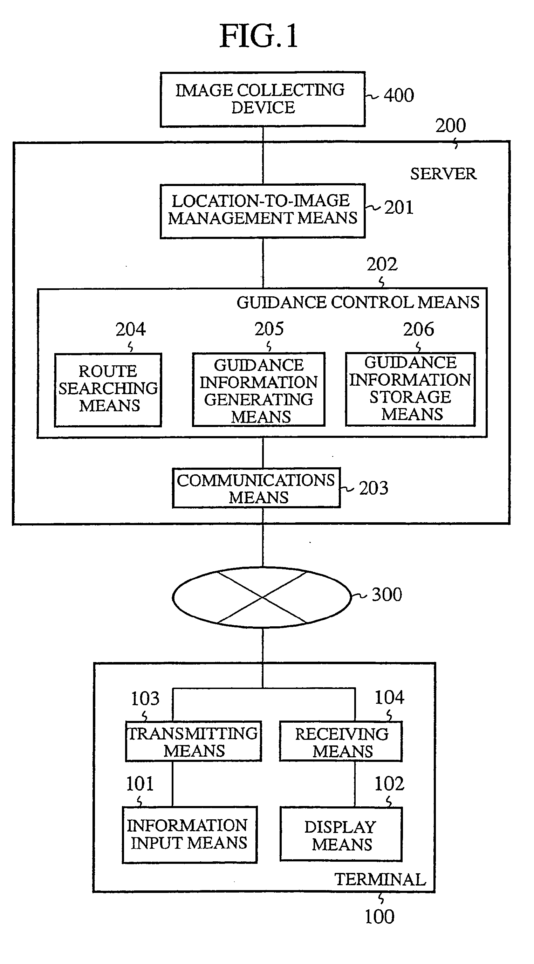

Fig. 1 is a block diagram showing a guidance system in accordance with embodiment 1 of the present invention.

The guidance system shown in the figure is provided with a terminal 100, a server 200, a network 300, and an image collecting device 400.

The terminal 100 is a mobile terminal which can be carried by a user, such as a mobile phone or PDA (Personal Digital Assistant) which can connect, via communications, with a network such as the Internet. The terminal 100 is provided with an information input means 101, a display means 102, a transmitting means 103, and a receiving means 104. The information input means 101 is a functional unit for inputting information, including the place of departure, the present location of the terminal and the destination, and for inputting route guidance information which will be explained below. When the terminal is a mobile phone, for example, this information input means 101 is implemented via, for example, various types of keys. On the other hand, when the terminal is a PDA, the information input means is constructed using a keyboard or a touch panel disposed on the screen of the display. The display means 102 is a functional unit for displaying guidance information or displaying various kinds of selected information. This display means 102 consists of, for example, a liquid crystal display. The transmitting means 103 is a functional unit for transmitting various kinds of information that are inputted to the terminal by the information input means 101 to the server 200 via the network 300. The receiving means 104 is a functional unit for receiving route guidance information from the server 200 via the network 300. The transmitting means 103 and receiving means 104 are implemented using the communication functions of the terminal which is a mobile phone or PDA. Furthermore, when the terminal is a PDA, the communication functions also include the functions of a card-type communication unit connectable with the network, the communication unit being mounted in the main body of the PDA.

In addition, the information input means 101, display means 102, transmitting means 103, and receiving means 104 included in the terminal 100 can be implemented via a computer, and they are constructed of both pieces of software respectively corresponding to their functions, and pieces of hardware, such as a CPU and a memory.

The server 200 is a server computer connected to the network 300, and has a function of providing predetermined route guidance information for the terminal 100 in response to a request for route guidance from the terminal 100. This server 200 is provided with a location-to-image management means 201, a guidance control means 202, and a communications means 203.

The location-to-image management means 201 is a functional unit for storing and managing image information associated with location information which is acquired by the image collecting device 400. The guidance control means 202 has a function of, when the server has a request for route guidance from the terminal 100, acquiring a predetermined guidance point which is located on a route, then acquiring an image based on the guidance point from the location-to-image management means 201, and providing the acquired image and information about at least a guidance point which is located on the route forward of the above-mentioned guidance point, as guidance information, for the terminal 100. This guidance control means 202 is provided with a route searching means 204, a guidance information generating means 205, and a guidance information storage means 206. The route searching means 204 is a functional unit for searching for a guidance route to be provided for the user according to the present location of the terminal and destination information which are received from the terminal 100, and outputs the route searching result. The guidance information generating means 205 is a functional unit for generating an image or guidance information including an image according to the route searching result outputted from the route searching means 204. The guidance information storage means 206 has a function of storing the guidance information generated by the guidance information generating means 205, holding information indicating which parts of guidance information have been already sent to the terminal 100 in response to one or more requests for route guidance from the terminal 100, and sending the next part of guidance information to the terminal according to a further request for route guidance.

The communications means 203 is a functional unit for transmitting and receiving data to and from each of two or more terminals 100 via the network 300. These positions-image management means 201, guidance control means 202, and communications means 203 are implemented via pieces of software respectively corresponding to their functions, and pieces of hardware, such as a CPU and a memory.

The image collecting device 400 is the device which collects plural pieces of image information for route guidance which were continuously acquired along roads, as well as information about locations where the plural pieces of image information were obtained, for example. A concrete method of collecting plural pieces of image information and plural pieces of location information will be explained below.

First, a process of collecting images carried by the image collecting device 400 will be explained.

The image collecting device 400 acquires images about roads and alleys included in areas which are targets for route guidance in advance, as well as plural pieces of location information about them. There can be a one-to-one correspondence between the images and the plural pieces of location information. Since the heads of both image data and location data can be coincided when a process of recording the image data and a process of recording the location data are started simultaneously, any subsequent image and location data can be associated with each other by using an elapsed time. Acquisition of location information can be done using GPS (Global Positioning System), for example. Furthermore, recording of acquired location information can be done using a personal computer serially connected to the image collecting device via an interface such as an RS-232C interface. Recording of images can be done using a commercial DV video camera or the like. By controlling a start of the recording of images and location information through a personal computer to which a GPS receiver is connected via a deck control terminal, such as LANC, the recording of images and location information can be started simultaneously. It is apparent that another method can be used as far as it can record location information and images simultaneously.

Plural pieces of image information which were thus collected by the image collecting device 400 are inputted into the location-to-image management means 201 of the server 200. The location-to-image management means 201 carries out record management of an image by associating location information with each frame of the image.

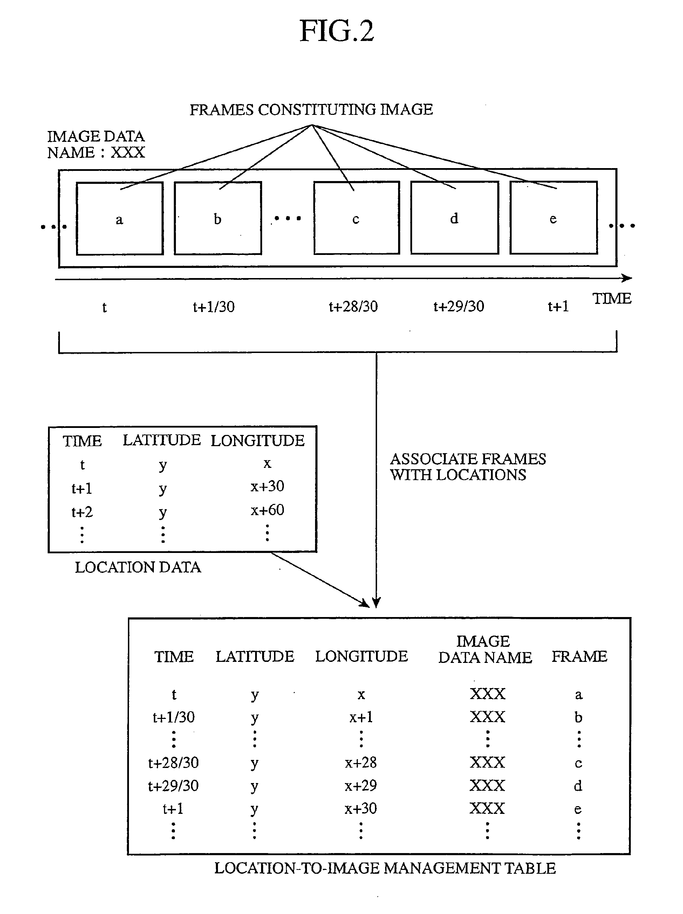

Fig. 2 is an explanatory diagram showing a method of recording image data.

As shown in the figure, frames which constitute an image (e.g., a moving image) are associated with plural pieces of location information, respectively. For example, since GPS signals are acquired at predetermined intervals of 1 second, location information is associated with image data which is acquired at a rate of 30 frames per second by interpolating points between two location data which are sequentially obtained from the GPS signals. Location information associated with each frame can be obtained by linearly interpolating points between two location data which are sequentially obtained from the GPS signals, or by carrying out interpolation based on the degree of acceleration or deceleration which is determined by a variation between the two location data. This embodiment uses a method, as shown in Fig. 2, of linearly interpolating points between two adjacent location data.

Next, actual guidance processing which is carried out in a state where image information for route guidance is thus stored in the location-to-image management means 201 of the server 200 will be explained.

When the user wants to use a route guidance service provided by the server 200 at a point, he or she can access the route guidance service using the terminal 100. As a method of accessing a route guidance service, there is provided an Internet access service which is generally implemented via a mobile phone, and which allows the user to input an address to the route guidance service, for example, or to select a link to the route guidance service from a top menu of a portal site which is managed by each carrier through category searching.

When the user logins into the route guidance service, he or she inputs the present location of the terminal and his or her destination to the terminal through the information input means 101, and causes the terminal to transmit information about the present location of the terminal and information about the destination to the server 200 via the transmitting means 103. At this time, the terminal can simultaneously transmit the information about the present location of the terminal and information about the destination to the server 200, or can alternatively transmit the information about the present location of the terminal to the server 20 after transmitting the information about the destination to the server. For example, the user can input the present location of the terminal with characters and cause the terminal to transmit it to the server so as to allow the server to recognize the present location of the terminal and send candidates for the destination to the terminal 100, and can select one candidate for the destination from them.

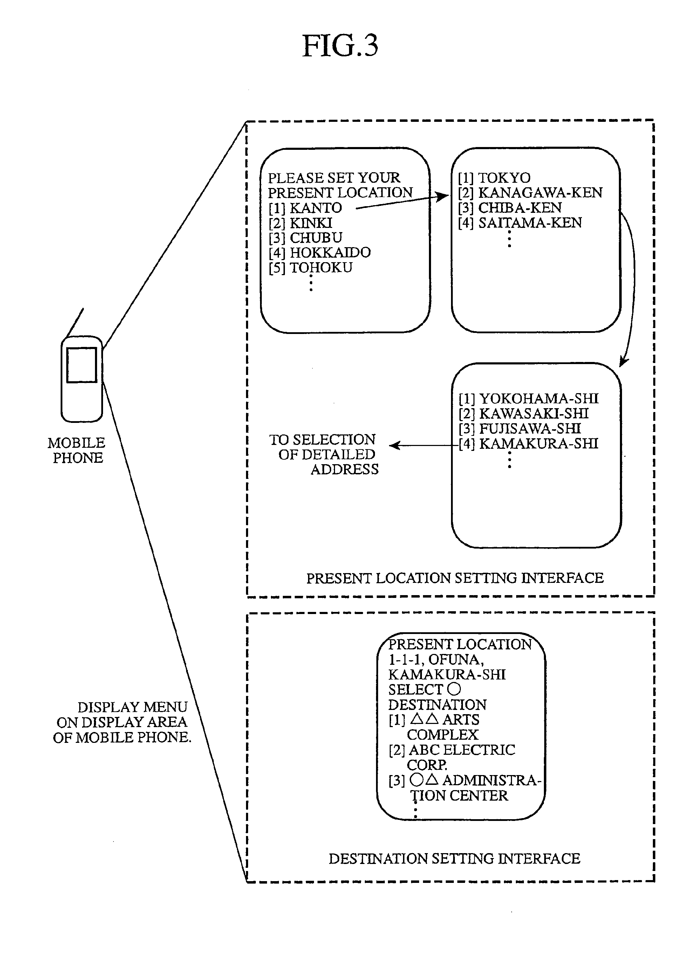

An example of user interfaces provided by the information input means is shown in Fig. 3.

A present location setting interface of Fig. 3 is an example in which the route guidance system provides a hierarchical menu for allowing the user to select a candidate for the present location of the terminal. The route guidance system narrows down an area including the present location of the terminal from a major category to a detailed category by using the present location setting interface. For example, the route guidance system displays a list of regions, such as Kanto, Tokai, and Kinki, first, and, when the user selects Kanto for example, urges the user to select one prefecture, such as Tokyo or Kanagawa-ken, and further urges the user to specify a specific location, such as a city or railway station, so as to cause the user to select the present location of the terminal. The route guidance system provides a destination setting interface for displaying destination candidates which the user can reach from the present location which he or she has selected via the present location setting interface so as to urge the user to select one destination candidate. For example, when the present location of the terminal is the No.X exit of Kudanshita subway station, the route guidance system can display destination candidates, such as Budokan and Yasukuni Jinja. The route guidance system can alternatively provide an interface for allowing the user to select an arbitrary location from an on-screen map or to input an address. Even in such a case, since this route guidance system is provided with image information about arbitrary locations on the route, it can easily support such an interface for allowing the user to select an arbitrary location from an on-screen map or to input an address.

When having a positioning function of measuring the present location thereof, the terminal 100 can also transmit the measured present location thereof, as the present location information, to the server 200. When setting the place of departure instead of the present location of the terminal, the route guidance system also makes it possible to preexamine the route in advance.

The server 200 receives a request from the terminal 100 via the communications means 203, and sends a description for the request to the guidance control means 202. When the received description for the request is related with the present location of the terminal (or the place of departure) and the destination, the guidance control means 202 processes them using the route searching means 204 first. The route searching means 204 searches for an optimal route extending to the destination from both the information about the received present location (or the place of departure), and the information about the destination. Since the route searching means uses a known route searching algorithm to search for an optimal route extending to the destination, the details of the route searching algorithm will be omitted hereafter. The result of the route searching is a series of plural pieces of location information (referred to route information from here on) about locations from the present location of the terminal (or the place of departure) to the destination. The route information thus includes plural pieces of information respectively associated with GPS points (points each specified by its latitude and longitude) which are running at proper distance intervals (e.g., at intervals of 10m).

This result is sent to the guidance information generating means 205. The guidance information generating means 205 generates guidance information based on the acquired route information.

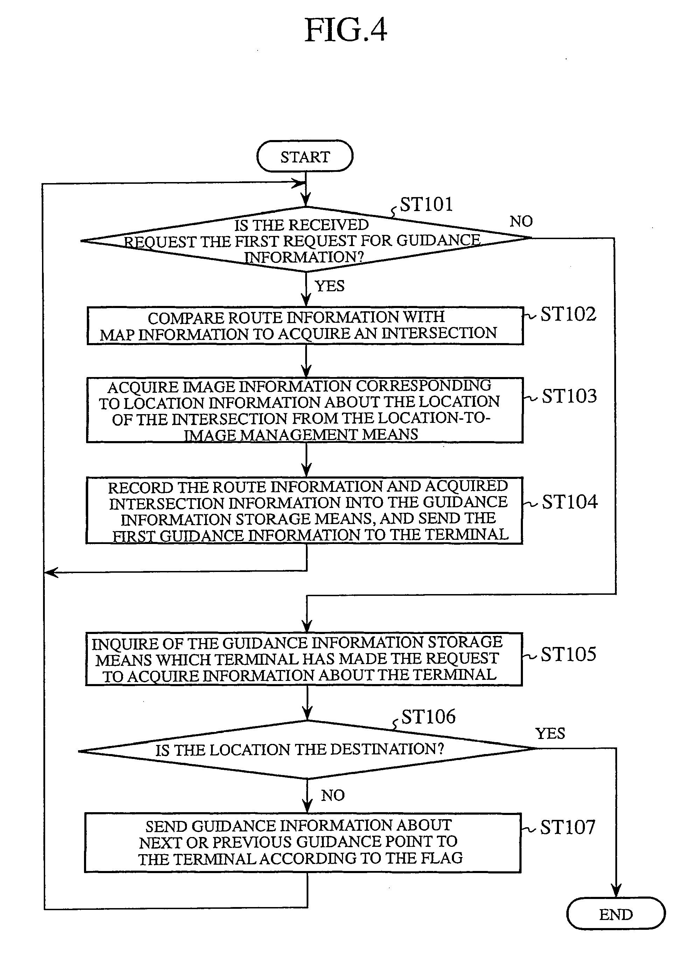

Fig. 4 is a flow chart showing the operation of the guidance information generating means 205.

The guidance information generating means 205 determines whether or not a request received thereby is the first request for transmission of guidance information (in step ST101). The first request for transmission of guidance information is a request which the above-mentioned terminal 100 makes when transmitting both the information about its present location and the information about the destination to the server. When, in step ST101, determining that the received request is the first request for transmission of guidance information, the guidance information generating means compares the route information with map information so as to acquire the location of an intersection on the route (in step ST102). The map information is associated with an area corresponding to the route information, and is prestored in the server 200 although it is not shown in Fig. 1. The guidance information generating means then acquires image information corresponding to the location information about the acquired intersection from the location-to-image management means 201 (in step ST103). The guidance information generating means then records the route information and acquired intersection information into the guidance information storage means 206, and sends the first guidance information to the terminal 100 (in step ST104). At this time, the guidance information generating means sets a flag for the data transmitted to the terminal 100 so as to specify both the next point for guidance and the previous point for guidance.

On the other hand, when, in step ST101, determining that the received request is not the first request for transmission of guidance information, i.e., determining that the received request is the second or subsequent request for transmission of guidance information, the guidance information generating means 205 inquires of the guidance information storage means 206 which terminal has made the received request (in step ST105). When acquired data then indicates that the location specified by the flag is the destination (in step ST106), the guidance information generating means 205 ends the guidance processing. On the other hand, when the acquired data does not indicate that the location specified by the flag is the destination, the guidance information generating means 205 sends guidance information about the next point or previous point to the terminal 100 via the communications means 203 according to the location specified by the flag (in step ST107).

The terminal 100 receives the route guidance information from the server via the receiving means 104, and then displays it using the display means 102.

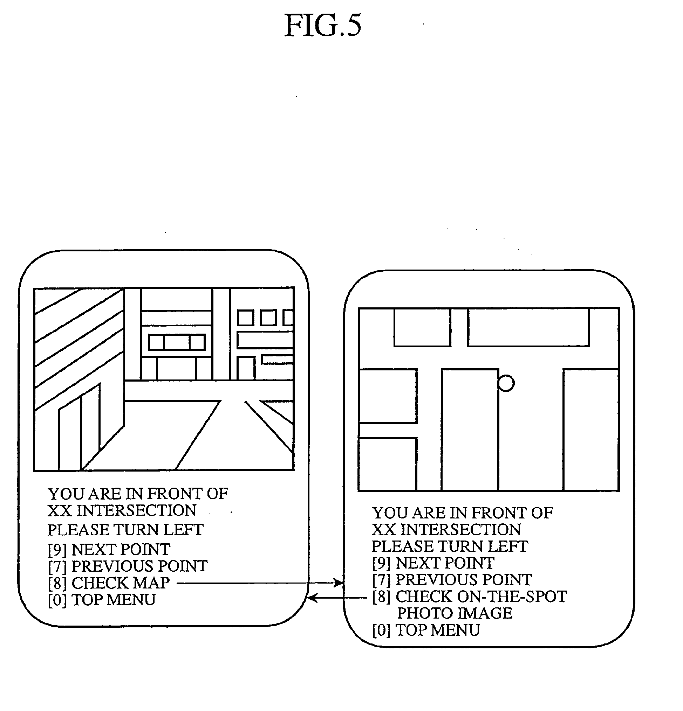

Fig. 5 is an example of the guidance information displayed by the display means 102.

The display means can thus construct the guidance information from a guidance image, an explanatory note, and a menu for aiding the user to travel the route. Needless to say, the display means can display only a guidance image. Since the guidance information is associated with the location of the corresponding point, the display means can also switch between a display of an on-the-spot photo image and a display of a map using the not-shown map information stored in the server 200. The user can look at the information displayed on the terminal 100 by the display means 102, and can head for the destination while comparing the information with actual scenes. When the user reaches a point where he or she can see much the same scene as that being currently displayed by the display means of the terminal, he or she can make a request for transmission of the next guidance information using the information input means 101. To this end, the information input means 101 provides a menu as shown in Fig. 5. When the user selects a menu item, the information input means transmits a request corresponds to a description for the selected menu item to the server 200 via the transmitting means 103. The server 200 then sends the next or previous guidance information to the terminal 100 according to the flow (i.e., steps ST101 to ST104 and steps ST105 to ST107 in Fig. 4) of the processing by the guidance information generating means 205.

In the guidance system in accordance with above-mentioned embodiment, the server provides guidance information for each intersection on the route. However, the guidance information is not limited to such information which is generated for each intersection. Since an image of any location on the route is stored in the location-to-image management means 201, the server can generate guidance information about an arbitrary point on the route,

As mentioned above, in the guidance system in accordance with embodiment 1, since the location-to-image management means 201 of the server does not prepare an image for every point, but stores an image of an arbitrary location on the route therein while associating the image with location information about the arbitrary location, the server can retrieve an image of an arbitrary location from a route searching result, and can easily generate guidance information using an on-the-spot photo image. Therefore, in accordance with embodiment, a guidance system which can provide the user with fine guidance information can be easily implemented.

In the guidance system according to above-mentioned embodiment 1, when receiving a request for route guidance from the terminal 100, the guidance control means 202 acquires a predetermined guidance point on the route, acquires image information based on the guidance point from the location-to-image management means 201, and provides information about at least a guidance point which is located on the route forward of the above-mentioned guidance point, as well as the image, as guidance information, for the user. Therefore, the guidance system can provide route guidance for the user exactly even if the terminal 100 does not have a means for detecting the present location thereof, for example.

### Embodiment 2.

In embodiment 1, an example which can be applied to even a case where the terminal has no positioning function of measuring the present location thereof is shown. On the other hand, in accordance with embodiment 2, there is provided a guidance system in which a terminal has a positioning function of measuring the present location thereof and a means for transmitting the positioning result to a server.

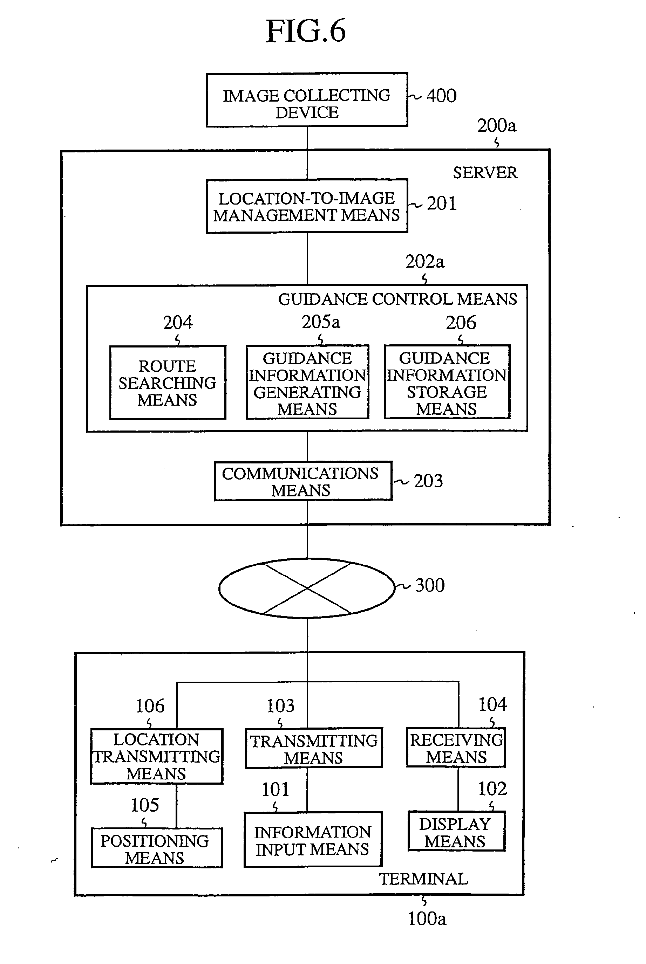

Fig. 6 is a block diagram of the guidance system according to embodiment 2.

The guidance system shown in the figure is provided with the terminal 100a, the server 200a, a network 300, and an image collecting device 400. The guidance system in accordance with this embodiment 2 differs from that in accordance with embodiment 1 in that the terminal 100a provides positioning information about the present location thereof to the server 200a, and the server 200a provides the terminal 100a with guidance information based on this positioning information. In other words, the terminal 100a is provided with an information input means 101, a display means 102, a transmitting means 103, a receiving means 104, the positioning means 105, and the location information transmitting means 106. Here, since the information input means 101, ..., and receiving means 104 of the terminal have the same structures as those of the terminal according to embodiment 1, the explanation of those components will be omitted hereafter. The positioning means 105 has a function of detecting the present location of the terminal 100a using, for example, GPS. The location information transmitting means 106 has a function of transmitting the location information detected by the positioning means 105 to the server 200a.

The server 200a is provided with a location-to-image management means 201, a guidance control means 202a, and a communications means 203. Although the fundamental structure of the server 200a is the same as that of embodiment 1, the guidance control means 202a has a structure different from that of the guidance control means 202 of embodiment 1. In other words, a guidance information generating means 205a of the guidance control means 202a is so constructed as to acquire image information from the location-to-image management means 201 based on the present location of the terminal 100a detected by the positioning means 105 and to provide this image, as guidance information, for the terminal when providing the first route guidance information for the terminal 100a, and, after that, when the location of the terminal 100a is distant from a previous guidance point by a predetermined distance, to provide an image corresponding to the location of the terminal 100a, as guidance information, for the terminal. Since the other components of the server are the same as those of embodiment 1, the corresponding components are designated by the same reference numerals, and the explanation of the components will be omitted hereafter. The image collecting device 400 has the same structure as that of embodiment 1.

In the example shown in the figure, the terminal 100a is provided with the positioning means 105. As an alternative, the server 200a can be provided with the positioning means, and the terminal 100 can be so constructed as to transmit only received GPS signals to the server 200 and the server 200 can be so constructed as to carry out positioning processing (i.e. , data processing for the detection of the location of the terminal 100a) based on the received signals using the positioning means 105.

When the user wants to use a guidance service which is provided by the server 200a, like that of embodiment 1, at an arbitrary point, he or she accesses the guidance service. The terminal 100a differs from that of embodiment 1 in that the location information which it has detected as its present location information using the positioning means 105 is sent to the server 200a, and the user inputs only destination information into the terminal. According to the operation of the terminal 100a, the server 200a performs the following operation.

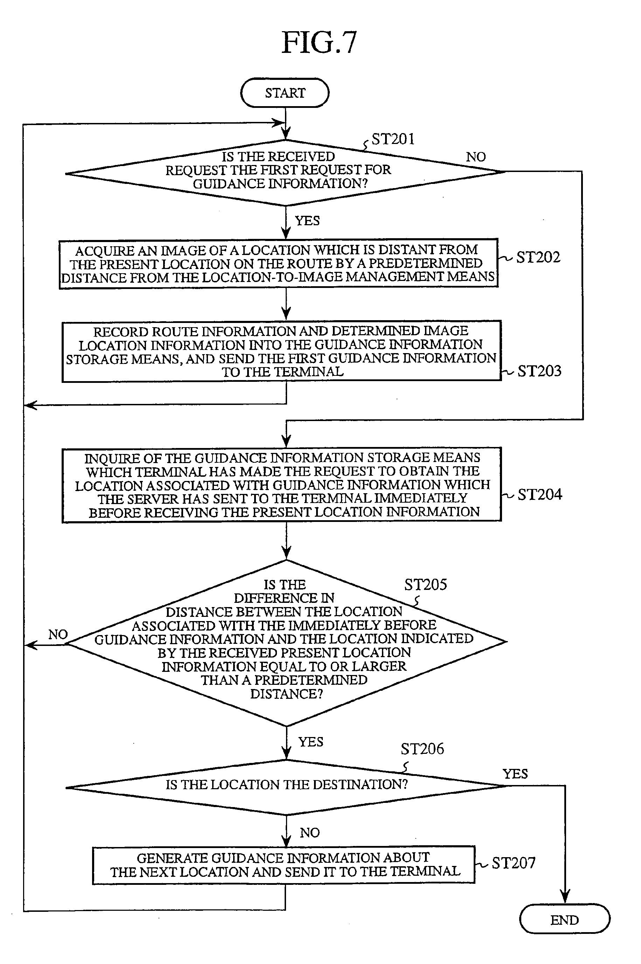

Fig. 7 is a flow chart showing the operation of the guidance information generating means 205a.

When, in step ST201, receiving the first request for transmission of guidance information, the server 200a carries out route searching using the route searching means 204, and sends the first guidance information generated by the guidance information generating means 205a to the terminal. The guidance information generating means 205a carries out a little different operation from what is explained in above-mentioned embodiment 1. In other words, the guidance information generating means 205a does not carry out a process, in step ST102 of embodiment 1, of comparing the route information with the map information so as to acquire information about an intersection. In accordance with embodiment 2, the guidance information generating means acquires an image of a scene which is seen from a location on the route which is distance from the present location of the terminal by a predetermined distance from the location-to-image management means 201 (in step ST202). The guidance information generating means then records the route information and determined image location information into the guidance information storage means 206, and sends the first guidance information to the terminal 100a (in step ST203).

The terminal 100a displays the guidance information using the display means 102. The terminal 100a carries out positioning processing at predetermined intervals using the positioning means 105. The position transmitting means 106 then transmits information about the present location of the terminal obtained by the positioning means 105 to the server 200a.

When receiving the present location information from the terminal, the server 200a, in step ST201, determines that it is not the first guidance information request, and the guidance information generating means 205a determines which terminal has transmitted the present location information to the server and acquires the location associated with the guidance information which the server has sent to the terminal immediately before receiving the present location information, and which is stored in the guidance information storage means 206 (in step ST204). The guidance information generating means then determines whether or not the difference in distance between the location associated with the immediately before guidance information and the location indicated by the received present location information is equal to or larger than a predetermined distance (e.g., 10 meters) (in step ST205), and, when the difference is equal to or larger than the predetermined distance, determines whether or not the present location is the destination (in step ST206). In performing this step ST206, when the present location falls within a range from the destination (e.g., the present location falls within a circular range of 10 or less-m radius from the destination, the guidance information generating means determines that the present location is the destination.

When, in step ST206, determining that the present location is not the destination, the guidance information generating means 205 generates guidance information corresponding to the next point (which is located 10 meters forward of the present location) and transmits the guidance information to the terminal (in step ST207). On the other hand, when, in step ST205, determining that the difference in distance between the location associated with the immediately before guidance information and the location indicated by the received present location information is smaller than the predetermined distance, the guidance information generating means returns to step ST201 in which it waits for reception of a request from the terminal 100a. When, in step ST206, determining that the present location is the destination, the guidance information generating means ends the route guidance processing which is being done for the terminal 100a.

In above-mentioned steps ST203 and ST207, the guidance information generating means can alternatively use moving image information as the guidance information about locations from the present location to the next point. The guidance information generating means can alternatively retrieve intersection information about an intersection on the route and record the intersection therein, and, when the terminal gets close to the intersection, can display an image of the intersection, as described in embodiment 1. For example, every time when the terminal moves along a straight line section extending to an intersection by a certain distance or more, the server can cause the terminal to change the on-screen image in turn, and, when the terminal comes within a fixed distance of the intersection, can display an image of the intersection until the terminal has passed through the intersection. Furthermore, only either an image of a scene which is seen from the present location of the terminal and which is provided as the first guidance information or the first guidance information can be an image of a point which is distant from the present location of the terminal by a distance shorter than the length of intervals at which guidance information is transmitted for the second or subsequent time.

As mentioned above, the guidance system in accordance with embodiment 2 includes the positioning means 105 for detecting the present location of the terminal 100a, and the guidance control means 202a provides guidance information for the terminal based on the present location of the terminal detected by this positioning means 105. Therefore, since the guidance system sequentially changes the on-screen image so that it shows a scene which the user can see in a forward direction every time when the terminal moves along the route by a certain distance or more, it can provide more intelligible route guidance for the user.

Furthermore, in the guidance system according to embodiment 2, when providing the first guidance for the terminal, the guidance control means 202a acquires image information based on the present location of the terminal 100a obtained by the positioning means 105 from the location-to-image management means 201, and defines this image as guidance information. After that, when the current location of the terminal 100a is distant from the previous guidance point by a predetermined distance, the guidance control means provides an image corresponding to the present location of the terminal 100a, as guidance information, for the terminal. Therefore, the guidance system can provide a screen display for the user every time when the user moves along the route by a certain distance suitable for route guidance.

### Embodiment 3.

Embodiment 3 relates to a guidance system which automatically detects a location where the user can see a landmark (i.e., an object) which is also an important point for route guidance so as to provide more intelligible route guidance for the user, while providing an image of an intersection or point which is located forward of the present location of the terminal by a certain distance from the present location of the terminal, as shown in above-mentioned embodiments 1 and 2.

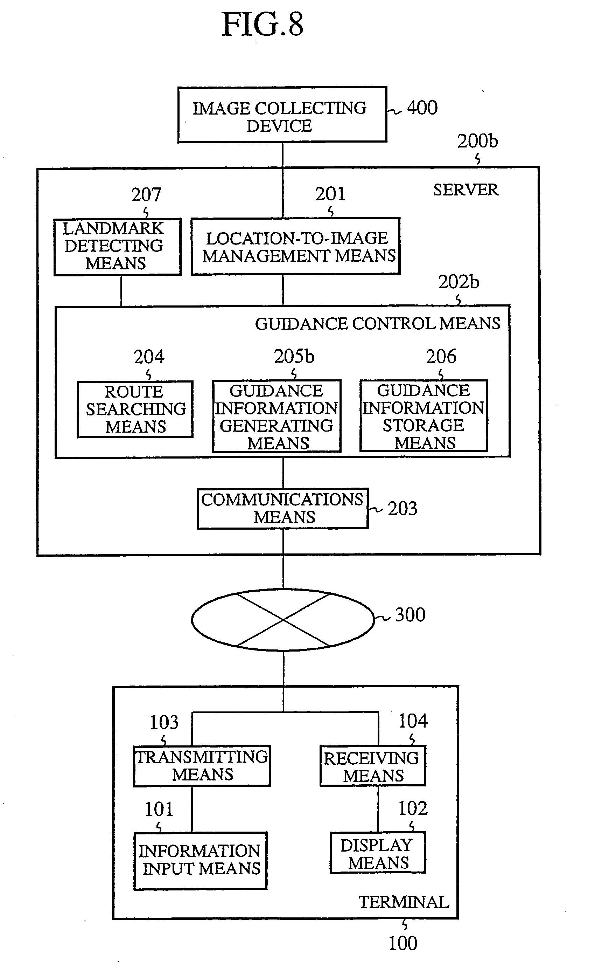

Fig. 8 is a block diagram of the guidance system according to embodiment 3.

The guidance system shown in the figure is provided with a terminal 100, a server 200b, a network 300, and an image collecting device 400. The guidance system in accordance with this embodiment 3 differs from that of embodiment 1 in that the server 200b provides, as a guidance point, a location where the user can see a landmark for the terminal 100.

In other words, the server 200b is provided with a location-to-image management means 201, a guidance control means 202b, a communications means 203, and a landmark detecting means 207. The server 200b differs from the server 200 in accordance with embodiment 1 in that it has the landmark detecting means 207 and the functions of the guidance control means 202b differ from those of the guidance control means of embodiment 1. The landmark detecting means 207 has a function of detecting a guidance point where the user can see a landmark as if it has a size equal to or larger than a predetermined size, and which satisfies conditions that it is distant from any intersection by a fixed distance or more. Any kind of object can be a landmark. For example, high-rise buildings and natural objects, such as mountains, are also included in landmarks.

A guidance information generating means 205b of the guidance control means 202b has a function of retrieving an image of a guidance point detected by the landmark detecting means 207 from the location-to-image management means 201 based on the guidance point, and generating guidance information.

Since the other components of the server are the same as those of embodiment 1, the explanation of the other components will be omitted hereafter.

First, since the terminal 100 operates in the same way that that of embodiment 1 does when making a request for route guidance, the operation of the terminal 100 will be omitted hereafter.

When receiving a request for route guidance from the terminal 100, the server 200b carries out route searching processing using the route searching means 204 so as to determine a route extending from the present location of the terminal to the destination, like that of embodiment 1. The guidance information generating means 205b in accordance with embodiment 3 then generates guidance information in the following way.

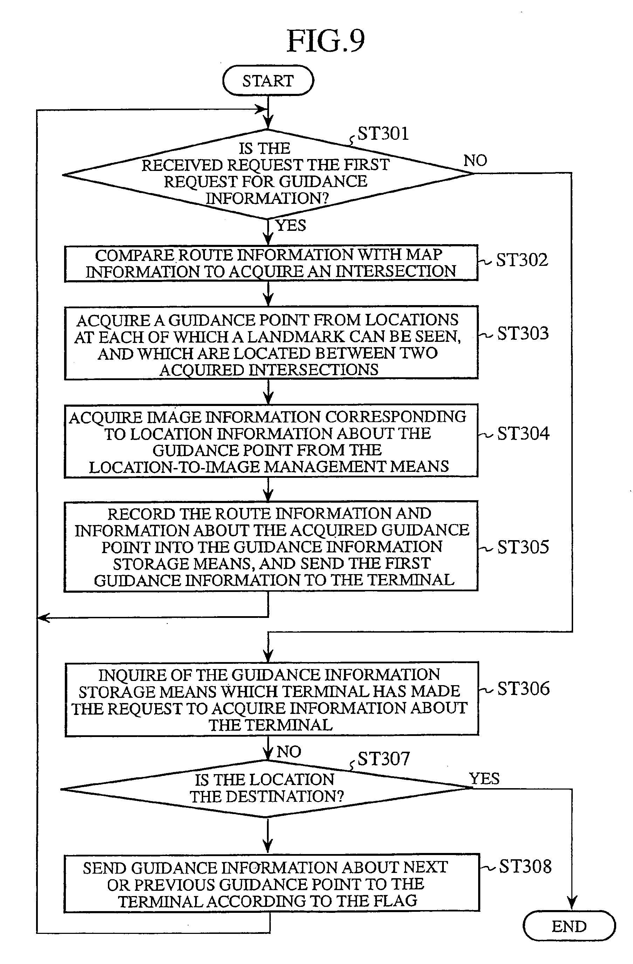

Fig. 9 is a flow chart showing the operations of the guidance information generating means 205b and landmark detecting means 207 of the server in accordance with embodiment 3.

The guidance information generating means, in step ST301, determines whether or not a request received by the server is the first request for transmission of guidance information first. When the received request is the first request for transmission of guidance information, the guidance information generating means compares route information with map information so as to acquire the location of an intersection on the route (in step ST302). The processing including this step is the same as that of embodiment 1. The landmark detecting means 207 then detects a guidance point which is located between the intersection and the next intersection, which are acquired by the guidance information generating means 205b, based on locations at each of which a landmark can be seen by the user and which satisfy predetermined conditions (in step ST303). When the landmark detecting means 207 has three-dimensional maps, for example, it carries out this processing as follows.

First, the landmark detecting means maps the route acquired by the route searching means 204 on a three-dimensional map, and then checks to see whether a landmark can come into sight at each point on the mapped route when viewed along a traveling direction in which the user should travel from the same eyepoint as human beings. The checking of whether a landmark can come into sight at each point on the mapped route when viewed along the traveling direction in which the user should travel from the same eyepoint as human beings is carried out by connecting the target landmark to a visual field range at each point on the route with a straight line, and by, when an obstruction, such as another building, exists on the straight line, excluding each point in question, and defining each point in question as a candidate and marking it otherwise. The landmark detecting means then calculates how many percentage of the field of view the corresponding landmark makes up at each marked point. To this end, the landmark detecting means can acquire which part of the landmark can be seen and how much size each visible part of the landmark has in the field of view by using a three-dimensional projection calculation method. The landmark detecting means determines whether or not each marked point can be defined as a point where a landmark can be seen by taking into consideration positional relationships between each marked point having a large percentage of the field of view which a landmark makes up, and another point, such as an intersection. The positional relationships that have to be taken into consideration includes 1. whether or not each marked point is distant from any intersection by a predetermined distance or more; and 2. whether or not the corresponding landmark makes up at least a predetermined percentage of the field of view at each marked point.

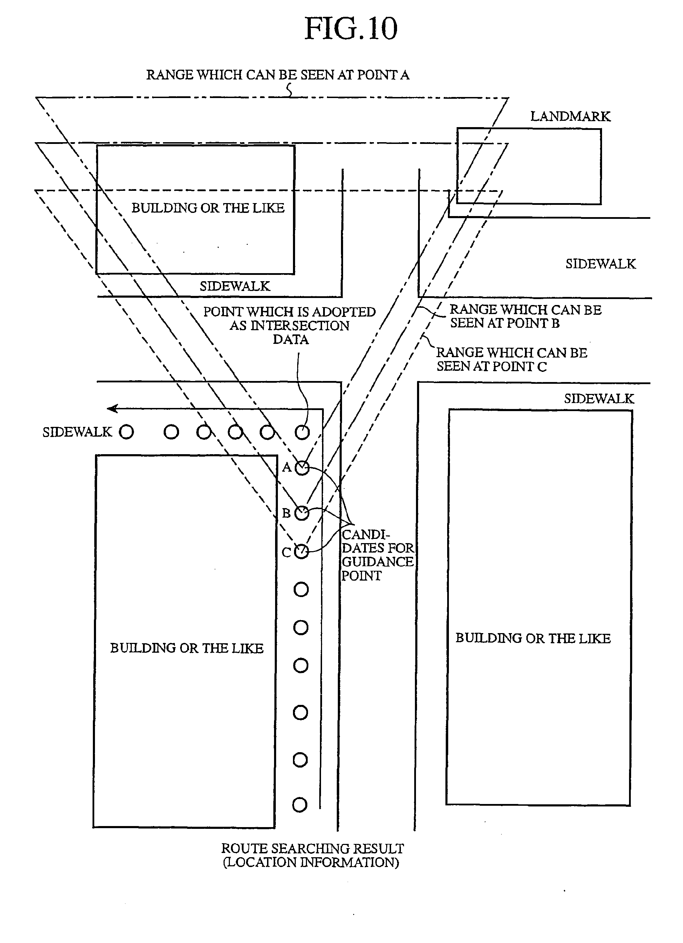

Fig. 10 is an explanatory diagram showing a relationship between a location where a landmark can be seen, and conditions.

Assuming that three points are marked as candidates, as shown in the figure, a point A is excluded since it is not distant from an intersection in question by a predetermined distance or more, and a point B is selected since a point C has a smaller percentage of the field of view which a target landmark makes up than the point B.

Referring to the flow chart of Fig. 9 again, the guidance information generating means 205b acquires image information corresponding to location information about the guidance point acquired in step ST303 from the location-to-image management means 201 (in step ST304). The guidance information generating means then records the route information and information about the determined guidance point into the guidance information storage means 206, and sends the first guidance information to the terminal 100 (in step ST305). At this time, the guidance information generating means sets a flag for the data transmitted to the terminal 100 so as to specify both the next point for guidance and the previous point for guidance.

On the other hand, when, in step ST301, determining that the received request is not the first request for transmission of guidance information, the guidance information generating means 205b operates in the same way that that of embodiment 1 does in steps ST105 to ST107. In other words, when determining that the received request is the second or subsequent request for transmission of guidance information, the guidance information generating means 205b inquires of the guidance information storage means 206 which terminal has made the received request (in step ST306). When acquired data then indicates that the location specified by the flag is the destination (in step ST307), the guidance information generating means 205b ends the guidance processing. On the other hand, when the acquired data does not indicate that the location specified by the flag is the destination, the guidance information generating means 205b sends guidance information about the next point or previous point to the terminal 100 via the communications means 203 according to the location specified by the flag (in step ST308).

In the above-mentioned example, the structure according to this embodiment is applied to embodiment 1. As an alternative, the structure according to this embodiment can be applied to embodiment 2 in which the terminal 100a has the positioning means. In such a case, the terminal sends location information about the present location thereof to the server at predetermined intervals, and the server carries out the same processes as shown in steps ST204 to ST207 of Fig. 7 of embodiment 2 when the received request is not the first request for transmission of guidance information.

As mentioned above, the guidance system according to embodiment 3 is provided with the landmark detecting means 207 for detecting, as a guidance point, a location where a landmark which serves as an object for route guidance can be seen, and the guidance control means 202b generates guidance information using an image corresponding to the location of the guidance point detected by the landmark detecting means 207. Therefore, the guidance system can provide finer route guidance for the user. For example, even when the route is a long straight path, the guidance system can provide images used for route guidance for the user.

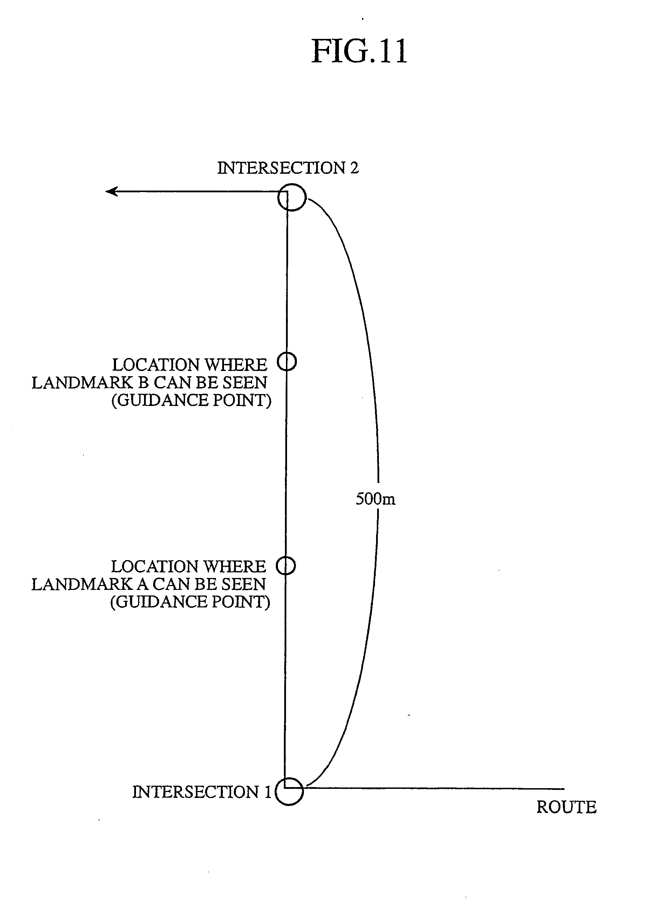

Fig. 11 is an explanatory diagram showing points at which guidance information is provided to the user.

As shown in the figure, when a long straight path (has a length of 500m, for example) extends between an intersection 1 and an intersection 2, the guidance system provides guidance information for the user at each of a location where a landmark A can be seen and a location where a landmark B can be seen, these locations being guidance points which are located between the two intersections. Therefore, the guidance system can prevent the user from feeling insecure when the user is moving along such a straight path, and makes it possible for the user to reach the destination exactly.

According to above-mentioned embodiment 3, the landmark detecting means 207 detects, as guidance points, at least locations each of which is distance from any intersection located on the route by a predetermined distance or more and at each of which a proportion of a corresponding landmark in a field of vision is equal to or larger than a predetermined value, from among locations at each of which a landmark can be seen. Therefore, the guidance system can provide a screen display which does not become complicated as a screen display for route guidance, and which makes it easy for the user to look for an object for route guidance, and hence the guidance system can further increase the convenience of the user.

### Embodiment 4.

The guidance system according to either of above-mentioned embodiments provides, as guidance information, an image and guidance information for the user using both the route searching result and location-to-image management information. On the other hand, a guidance system according to embodiment 4 superimposes additional information on image information.

Since the guidance system according to this embodiment has the same structure as that according to embodiment 3 shown in Fig. 8 in terms of drawings, the structure of the guidance system according to embodiment 4 will be explained with reference to Fig. 8.

A guidance control means 202b according to embodiment 3 is so constructed as to, when carrying out route guidance for the second and subsequent times, determine whether a traveling direction in which the user should travel is a direction of going straight forward, direction of a right-hand turn, or direction of a left-hand turn at a guidance point based on location information about the locations of the next guidance point and further next guidance point, and outputs information indicating the traveling direction in which the user should travel, as guidance information, based on a result of the determination. Since the other components of the guidance system are the same as those of embodiment 3, the explanation of the components will be omitted hereafter.

Before sending guidance information to the terminal 100, a guidance information generating means 205b of the guidance control means 202b detects a traveling-direction relationship between guidance information which the server is going to send to the terminal and the next guidance point, and superimposes the information indicating the traveling direction in which the user should travel on an on-the-spot photo image which it will send to the terminal as guidance information based on the relationship. The guidance information generating means carries out the detection of the traveling-direction relationship using the following method.

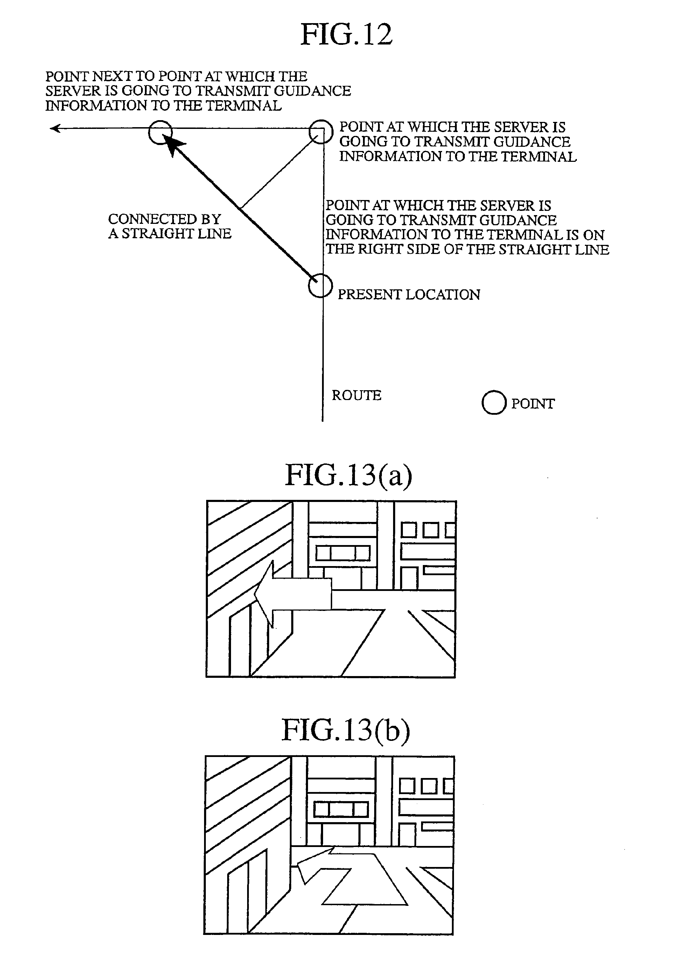

Fig. 12 is an explanatory diagram showing the detection of the traveling-direction relationship.

The guidance information generating means 205b connects between the point at which the server is going to send guidance information to the terminal, and the next point with a straight line, as shown in the figure, and checks to see a relationship between the straight line and location information about each point located in a section separated by the straight line. When the location of each point indicated by the location information is on the right side of the straight line, the guidance information generating means determines that the user should move in a direction of a left turn at each point to move toward the next point, whereas when the location of each point is on the left side of the straight line, the guidance information generating means determines that the user should move in a direction of a right turn at each point to move toward the next point. On the other hand, when the location of each point is on neither of the right and left sides of the straight line, the guidance information generating means determines that the user should go straight forward at each point to move toward the next guidance point. The guidance information generating means then generates a composite screen display in which the thus-acquired information is superimposed on an on-the-spot photo image.

The guidance system in accordance with this embodiment superimposes the information indicating the traveling direction in which the user should travel on an on-the-spot photo image through processing done by the server, as previously mentioned. As an alternative, the guidance system provides the image information and traveling direction information from the server to the terminal as guidance information so that the terminal can display a result of superimposing the traveling direction information on the image information.

Fig. 13 is an example of the composite screen display. As shown in Fig. 13(a), the guidance system can generate a screen display in which an arrow, such as a leftward or rightward pointing arrow, is simply superimposed on an on-the-spot photo image as guidance information. As an alternative, as shown in Fig. 13(b), the guidance system can generate a screen display in which an arrow which is turned into 3-D CG (computer graphics) according to the user's eyepoint is superimposed on an on-the-spot photo image as guidance information. Needless to say, the guidance system can also documentize the traveling direction information into a document and superimpose it on the on-the-spot photo image.

As mentioned above, in accordance with embodiment 4, when carrying out route guidance for the second and subsequent times, the guidance control means 202b determines whether the traveling direction in which the user should travel is a direction of going straight forward, direction of a right-hand turn, or direction of a left-hand turn at a guidance point based on location information about the locations of the next guidance point and further next guidance point, and outputs information indicating the traveling direction in which the user should travel, as guidance information, based on a result of the determination. Since the guidance system superimposes the traveling direction information, such as an arrow indicating the traveling direction in which the user should make a turn, on an on-the-spot photo image and displays the composite image, the guidance system can implement intelligible route guidance which makes it possible for the user to see and understand in which direction he or she should travel.

Since the terminal 100 is provided with a display means 102 for superimposing information indicating the traveling direction using the guidance information from the server 200b on the image information, and for displaying the image on which the traveling direction information is superimposed, the guidance system according to this embodiment 4 provides an advantage of being able to make the user easily grasp the traveling direction by seeing the displayed image.

### Embodiment 5.

In addition to the structure according to embodiment 3 or 4, a guidance system according to embodiment 5 has a structural unit for superimposing a link to useful information on an image which is provided, as guidance information, for the user so that the user can simply acquire detailed information about landmarks, such as bargain information about bargains provided by various stores which exist on a route.

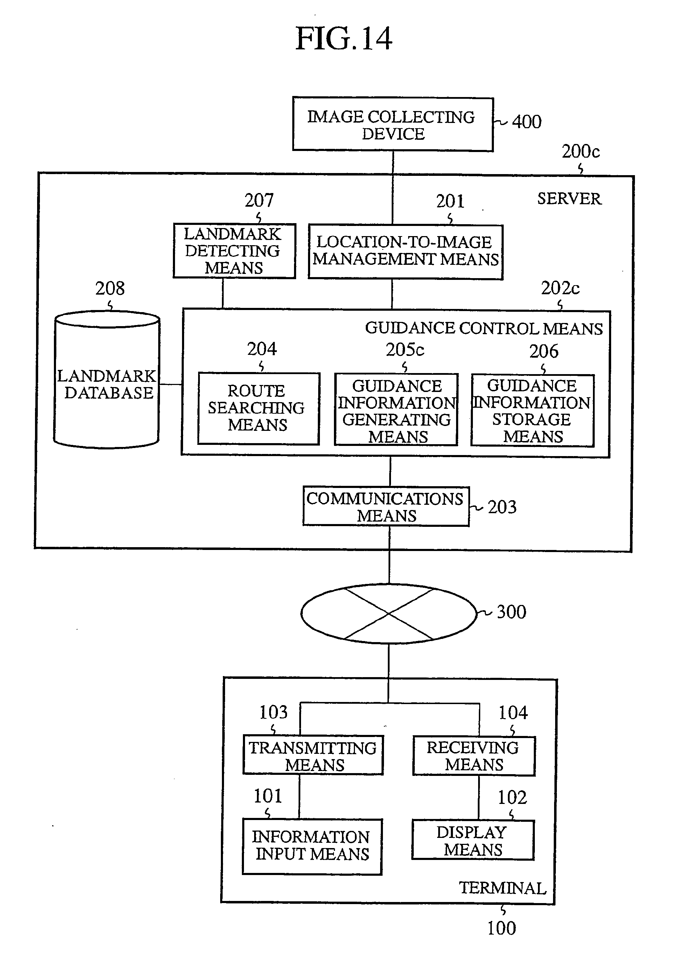

Fig. 14 is a block diagram of the guidance system according to embodiment 5.

The guidance system shown in the figure is provided with a terminal 100, a server 200c, a network 300, and an image collecting device 400. The guidance system in accordance with this embodiment 5 differs from that of embodiment 3 shown in Fig. 8 in that a guidance control means 202c of the server 200c incorporates link information indicating a link to a landmark into guidance information which is provided for the terminal 100.

In other words, the server 200c is provided with a location-to-image management means 201, a guidance control means 202c, a communications means 203, a landmark detecting means 207, and a landmark database 208. The server 200c differs from the server 200b in accordance with embodiment 3 in that the server 200c includes the landmark database 208 and the functions of the guidance control means 202c differ from those of embodiment 3. The landmark database 208 manages information about landmarks in a unified manner.

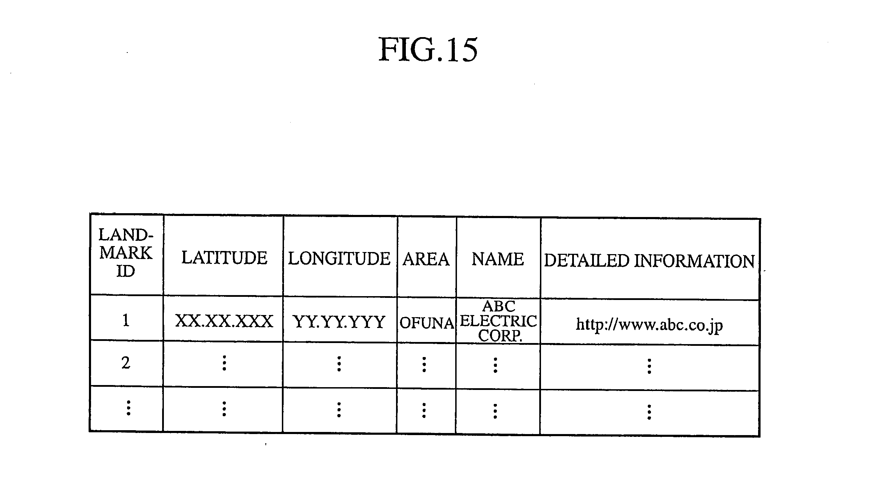

Fig. 15 is an explanatory diagram showing the data structure of the landmark database 208.

A unique ID is given to each landmark, and plural pieces of information such as the location of each landmark, an area including the location, each landmark's name, and link information (URL:Uniform Resource Locator) indicating a link to detailed information provided by each landmark is recorded for each landmark.

Referring now to Fig. 14 again, the guidance information generating means 205c of the guidance control means 202c has a function of retrieving an image of a guidance point detected by the landmark detecting means 207 from the location-to-image management means 201 based on the guidance point, acquiring link information indicating a link to detailed information from the landmark database 208 based on a landmark ID provided by the landmark detecting means 207, and generating guidance information to which this link information is added.

Since the other components of the server are the same as those of embodiment 3, the corresponding components are designated by the same reference numerals, and the explanation of the components will be omitted hereafter.

First, since the terminal 100 operates in the same way that that of either of embodiments 1, 3 and 4 does when making a request for route guidance, the operation of the terminal 100 will be omitted hereafter.

When receiving a request for route guidance from the terminal 100, the server 200c carries out route searching processing using the route searching means 204 so as to determine a route extending from the present location of the terminal to the destination, and the landmark detecting means 207 detects a guidance point on the route at which a landmark can be seen and the guidance information generating means 205c generates guidance information based on these pieces of information.

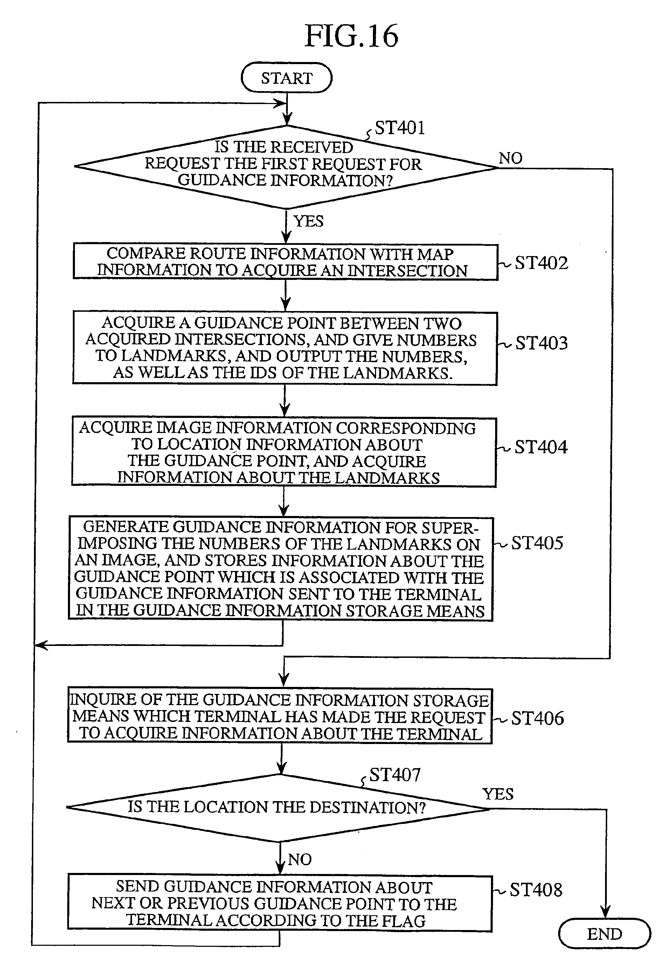

Fig. 16 is a flow chart showing the operation of the guidance information generating means 205c in accordance with embodiment 5.

The guidance information generating means, in step ST401, determines whether or not the request is the first request for transmission of guidance information first. When the request is the first request for transmission of guidance information, the guidance information generating means compares route information with map information so as to acquire the location of an intersection on the route (in step ST402). The landmark detecting means 207 then detects all guidance points at each of which a landmark can be seen and which are located between the intersection and the next intersection, which are acquired by the guidance information generating means, based on locations where landmarks satisfying predetermined conditions can be seen by the user (in step ST403). This detecting process of detecting a guidance point is the same as that carried out by the landmark detecting means of embodiment 3. The landmark detecting means 207 gives numbers starting from 1 to landmarks which can be seen at each detected point, and sends information indicating the numbers, as well as IDs respectively specifying the landmarks, to the guidance information generating means 205c.

The guidance information generating means 205c acquires image information corresponding to the location of each detected guidance point from the location-to-image management means 201, and also acquires the names of the corresponding landmarks and detailed information about the landmarks from the landmark database 208 based on the landmarks' IDs outputted in step ST403 (in step ST404). The guidance information generating means, in the next step ST405, generates guidance information using the number information generated by the landmark detecting means 207 and location information about the landmarks so as to generate a composite screen display in which the numbers are marked on the landmarks which can be seen on an on-the-spot photo image, respectively. The guidance information generating means also links the displayed numbers with the plural pieces of detailed information about the landmarks, and transmits these pieces of information to the terminal 100 as guidance information. The guidance information generating means further stores information about the guidance points associated with those pieces of guidance information in the guidance information storage means 206.

When receiving such the pieces of guidance information, the terminal 100 displays them using the display means 102.

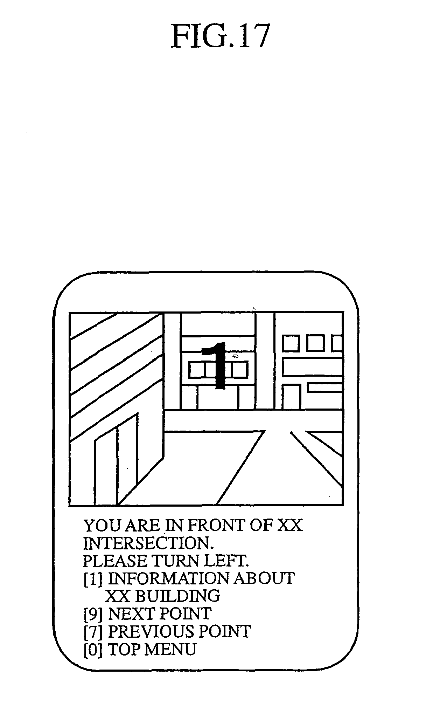

Fig. 17 is an explanatory diagram showing a screen display example according to embodiment 5.

As shown in the figure, a number 1 inked to detailed information or the like about a landmark included in the screen display is marked on the landmark. When the user wants to see the detailed information or the like about this landmark, he or she selects and inputs this number using a dial button. As a result, the terminal displays the information pointed by the number so that the user can peruse the detailed information about the corresponding landmark.

Since the steps ST406 to step ST408 in the flow chart of Fig. 16 which are carried out when the guidance information generating means, in step ST401, has determined that the received request is not the first request for transmission of guidance information are the same as the steps ST306 to ST308 of embodiment 3, the explanation of the steps ST406 to step ST408 will be omitted hereafter.

The structure according to above-mentioned embodiment 5 is applied to embodiment 3. As an alternative, the structure according to this embodiment can be applied to embodiment 4.

As mentioned above, the guidance system in accordance with embodiment 5 includes the landmark database 208 for storing information about landmarks, and the guidance control means 202c outputs link information indicating a link to a landmark corresponding to each guidance point extracted by the landmark detecting means 207 as guidance information. Therefore, the guidance system can provide the user with not only the guidance information but also information useful for the user.

In addition, in the guidance system in accordance with embodiment 5, the terminal 100 is provided with the display means 102 which superimposes link information indicating a link to a landmark on an image for route guidance, and displays the image on the screen thereof. Therefore, even when the user wants to peruse detailed information about the landmark displayed during the route guidance, he or she does not need to perform an operation of separately accessing the detailed information to acquire this information. Thereby, the convenience of users can be improved.

In either of above-mentioned embodiments, a mobile terminal, such a mobile phone or PDA, can be used as the terminal 100 or 100a. The terminal 100 or 100a is not limited to such a mobile terminal, and can be a car navigation apparatus or the like, for example. Either of above-mentioned embodiments can be similarly applied to such a case where the terminal is a car navigation apparatus or the like.

### Industrial Applicability

As mentioned above, the guidance system in accordance with the present invention is applied to both a pedestrian navigation system and a car navigation system, and is suitable for providing guidance information for the user.

## Claims

1. A guidance system in which an image for guidance is prepared in a server and said server provides said image as guidance information for a terminal in response to a request from the terminal, **characterized in that**
said server comprises:
a location-to-image management means for holding image information indicating a one-to-one correspondence between images and plural pieces of location information about their shooting locations; and
a guidance control means, responsive to a request for route guidance from said terminal, for acquiring an image corresponding to a guidance point which is located on a route which is to be provided for the terminal as said route guidance from said location-to-image management means, and for providing the image, as guidance information, for said terminal.

2. The guidance system according to Claim 1, **characterized in that** when receiving a request for route guidance from the terminal, the guidance control means acquires a predetermined guidance point which is looted on the route, also acquires image information corresponding to the predetermined guidance point from the location-to-image management means, and provides, as well as this image, information about at least a guidance point which is located on the route forward of said predetermined guidance point.

3. The guidance system according to Claim 1, **characterized in that** said system includes a positioning means for detecting a present location of the terminal, and, when receiving a first request for route guidance from the terminal, the guidance control means acquires image information corresponding to the current position of the terminal detected by said positioning means from the location-to-image management means and provides this image as guidance information, and, after that, when the present location of said terminal is distant from a previous guidance point by a predetermined distance, provides an image corresponding to the present location of said terminal as guidance information.

4. The guidance system according to Claim 1, **characterized in that** said system includes a landmark detecting means for detecting, as guidance points, locations at each of which a landmark which is used as an object of route guidance can be seen, and the guidance control means generates guidance information using an image corresponding to a location of a guidance point detected by said landmark detecting means.

5. The guidance system according to Claim 4, **characterized in that** the landmark detecting means detects, as guidance points, at least a location which is distance from any intersection located on the route by a predetermined distance or more and where a proportion of a corresponding landmark in a field of vision is equal to or larger than a predetermined value, from among the locations at each of which a landmark can be seen.

6. The guidance system according to Claim 1, **characterized in that** when carrying out route guidance for second and subsequent times, based on location information about a next guidance point and a further next guidance point, the guidance control means determines whether a direction of the route is a direction of going straight forward, direction of a right-hand turn, or direction of a left-hand turn at said guidance point, and outputs information indicating a traveling direction in which a user should travel, as guidance information, based on a result of the determination.

7. The guidance system according to Claim 4, **characterized in that** said system includes a landmark database for storing information about landmarks, and the guidance control means outputs, as guidance information, link information about a landmark corresponding to the guidance points extracted by the landmark detecting means.

8. The guidance system according to Claim 6, **characterized in that** the guidance information generating means provides, as guidance information, information indicating the traveling direction in which the user should travel which is superimposed on the image information.

9. The guidance system according to Claim 7, **characterized in that** the terminal is provided with a display means for superimposing the link information on the image information.

10. The guidance system according to Claim 6, **characterized in that** the terminal is provided with a display means for superimposing the information indicating the traveling direction on the image information which is received as guidance information from the server.
